# EUROPEAN PATENT APPLICATION

(11) **EP 3 156 668 A1**
(43) Date of publication of application: **19.04.2017**
(21) Application number: 16186847.6
(22) Date of filing: 01.09.2016
(51) Int. Cl.: F16B 21/07, F16B 5/06, F16B 2/10

(54) **FASTENING CLIP AND FASTENING METHOD**

(30) Priority: 15.10.2015 DE 102015117536
(71) Applicant: Newfrey LLC, New Britain, CT 06053 (US)
(72) Inventor: Kempf, Christian, 35394 Giessen (DE); Hanft, Matthias, 35394 Giessen (DE); Stau, Bastian, 35394 Giessen (DE)
(74) Representative: Witte, Weller & Partner Patentanwälte mbB

(57) **Abstract**

Clip (30) for fastening an article (12) to a workpiece (14) with respect to which a fastening stud (16) protrudes, having a base element (32) which has a fastening stud receptacle (42) via which the base element (32) is mountable on the fastening stud (16), and having a lever element (34) which is coupled to the base element (32) so as to be pivotable about a pivot axis (46) between a starting position (38) and a fastening position (36).

Here, the clip (30) has an elastic pretensioning device (60) which is arranged at the lever element (34) in a region (64) between the fastening stud receptacle (42) and the pivot axis (46).

## Description

The present invention relates to a clip for fastening an article such as an attachment part to a workpiece such as a portion of a body of a motor vehicle, wherein a fastening stud protrudes with respect to the workpiece, having a base element which has a fastening stud receptacle via which the base element is mountable on the fastening stud, and having a lever element which is coupled to the base element so as to be pivotable about a pivot axis between a starting position and a fastening position.

Furthermore, the present invention relates to a method for fastening an article to a workpiece with respect to which a fastening stud protrudes, having the step of using a clip of the abovementioned type.

Clips for fastening articles to workpieces, in particular for fastening articles to a vehicle body, are well known. The fastening system used here is usually based on a stud which is joined to a surface of a body portion, for example by stud welding, by adhesive bonding, by thermoplastic welding or the like. In the process, the stud defines a fastening axis. The stud can be a threaded stud having a shank which has a substantially constant cross section. However, the stud can also contain a T-stud having a head spaced apart from the workpiece, a pinecone stud or what is known as a ball stud.

Here, the clip is fixed to the fastening stud. An article to be fastened can then, in some embodiments, be fixed directly to the clip itself, for example in the form of electric lines, brake lines or the like, which are inserted or latched into suitable receptacles in the clip. In the case of clips in which elongate articles are introduced into receptacles in the clip itself, it is known to form a lever element or cover element on the clip, said element closing such line receptacles in a latching manner.

In some cases, the article to be fastened is a substantially extensive article which is to be fastened parallel to a surface of the workpiece, for example an attachment part in the form of a lining part such as a wheel arch liner, a base of a CW stud or the like. Generally, such sheet-like articles can be screwed to the workpiece by means of screws and nuts, or with what are known as sliding clips. However, an elastic pretensioning force cannot be configured to be very high in the case of the latter.

Document EP 1 975 013 B1 discloses an airbag-installation fastening device which has two fastening members which are connected together by means of a joint member. An airbag member of an airbag can be positioned and fixed between the fastening members. An arm extends from one of the fastening members, said arm being pivotable such that, with the airbag member inserted, it can visually confirm a completed fastening installation state.

Document EP 1 998 983 B1 discloses a fastening clip for an airbag for use in a vehicle, having two fastening elements which each have an arm, wherein the arms are connected via a hinge, wherein a fastening part for latching into a through-opening in a workpiece is provided on one of the arms, wherein a peg for coupling the arms is formed by the same fastening part, and wherein the arms can be fastened together via a flexible tether at their free ends.

Although the last-mentioned documents disclose clips in which a base element and a lever element are pivotable with respect to one another about a pivot axis, the two documents do not deal with the manner in which the clip or the article can be fixed with pretension with respect to the workpiece.

Accordingly, it is an object of the invention to specify an improved clip for fastening an article to a workpiece, and a corresponding fastening method, wherein preferably high pretensioning forces are achievable by means of the elastic pretensioning device.

This object is achieved, in the case of the clip mentioned at the beginning, in that an elastic pretensioning device of the clip is arranged at the lever element in a region between the fastening stud receptacle and the pivot axis.

Furthermore, the above object is achieved by a method for fastening an article to a workpiece with respect to which a fastening stud protrudes, having the steps of providing a clip of the type according to the invention in the starting position, arranging the article on the workpiece such that the fastening stud protrudes with respect to the article, mounting the fastening element on the fastening stud such that the fastening stud engages with the fastening stud receptacle, and finally pivoting the lever element with respect to the base element in order to establish the fastening position.

Here, the base element can initially be provisionally mountable on the fastening stud in a first fastening step. The elastic pretension which is generated by the elastic pretensioning device is preferably only established when the lever element is pivoted from the starting position into the fastening position.

As a result of the measure of arranging the pretensioning device in the region between the fastening stud receptacle and the pivot axis, it is possible to clamp the clip relatively strongly with respect to the article or with respect to the workpiece with relatively little application of force, such that the article can be fixed to the workpiece in a secure, in particular vibration-resistant manner.

The elastic pretensioning device preferably acts, as mentioned, only in the fastening position of the lever element. The elastic pretensioning device is preferably supported between the lever element and the article which is to be fixed to the workpiece.

In the fastening position, the lever element preferably extends such that the free end of the lever element, on which the force for establishing the fastening position acts, for example by manual actuation, is arranged on that side of the fastening stud receptacle that is located opposite the pivot axis.

Preferably, the lever element has a cover portion which covers the fastening stud receptacle in the fastening position and thus protects it from external influence.

The distance between the pivot axis and the elastic pretensioning device is preferably less than the distance between the elastic pretensioning device and the free end of the lever element, in particular less than half this length. The length specifications should preferably be understood here in the radial direction with respect to a fastening axis along which the fastening stud is oriented.

The fastening stud can be a stud which extends along the fastening axis from the workpiece perpendicularly to a surface of the workpiece, and can be configured as a threaded stud having a shank, the cross section of which is substantially constant. In this case, the elastic pretensioning means can act for example on turns of the thread on the shank. However, the fastening stud can also have an enlarged head at its free end pointing away from the workpiece, it being possible in this case for forces which are exerted in order to establish the elastic pretension to act on the underside of said head. Furthermore, it is possible for the fastening stud to be configured as a ball stud, as is described for example in the document DE 10 2012 003 337 A1, or as a double-ball stud, in which two ball-like portions along the fastening axis, between which elastic pretensioning forces can act, form the stud.

As a result of the lever arrangement established by the measure according to the invention of arranging the elastic pretensioning device between the fastening stud receptacle and the pivot axis, the pretensioning device is actuated in a "toggle-like" manner.

The object is thus fully achieved.

According to a preferred embodiment, which represents a separate invention in conjunction with the preamble of claim 1, the lever element is latchable to the base element in the fastening position by means of a latching apparatus, wherein a lever-element latching device of the latching apparatus is arranged on the lever element in a region on that side of the fastening stud receptacle that is located opposite the pivot axis, and/or wherein a base-element latching device is arranged on that side of the fastening stud receptacle that is located opposite the pivot axis.

In this embodiment, high fastening forces can be realized, even though only relatively small forces need to be exerted on the lever element in the region of the latching device. Preferably, no pretensioning device is provided in the region of the latching device.

According to a further preferred embodiment, the base element has a base-element pivoting portion aligned with the pivot axis, wherein the lever element has two lever-element pivoting portions which are arranged on opposite sides of the base-element pivoting portion.

As a result, pivotability between the base element and the lever element can be established in a structurally favourable manner. In addition, via a pivot axis established in such a way, relatively high forces can be transferred from the lever element to the base element and vice versa. This is particularly preferred in the present case on account of the relatively high pretensioning forces.

Here, the base-element pivoting portion and the lever-element pivoting portions can be formed via robust, loosely moulded-on hinges, which are clamped in the fastening position.

It is furthermore advantageous here for the lever-element pivoting portions to be connected together by means of a cover portion which covers at least the fastening stud receptacle of the base element in the fastening position.

In this embodiment, the clip can consequently be safeguarded well in the fastening position against external influences, as occur for example at wheel arches in motor vehicles.

Furthermore, it is preferred overall, and considered to be a separate invention in conjunction with the preamble of Claim 1, when the base element and the lever element are connected together in the starting position via a severable connecting element which is intended to be severed in order to establish the fastening position.

Such a predetermined breaking point can ensure that the clip remains in its open starting position during transport up until it is mounted. In addition, such a connecting element can in some cases mean that, when it is produced by an injection-moulding process, the clip is producible in one filling with a gate mark using what is known as hot runner technology.

Furthermore, it is particularly preferred for the fastening element and the lever element to be formed in one piece with one another, at least in the starting position.

According to a further preferred embodiment, the fastening stud receptacle of the base element is configured such that the base element is mountable in a transverse direction with respect to a fastening axis.

The fastening axis is in this case preferably the longitudinal axis of the fastening stud. The base element is mounted in this case, with the clip still in the starting position, in that the base element is shifted with respect to the fastening stud parallel to a surface of the article to be fastened, until a feature of the base element engages behind a fastening feature of the fastening stud.

According to an alternative embodiment, the fastening stud receptacle of the base element is configured such that the base element is mountable in a direction parallel to such a fastening axis.

In this embodiment, it is generally easier to mount the clip in the starting position, since the clip is pushed axially onto the fastening stud in order to pre-mount the base element thereon.

In this embodiment, it is preferred for the fastening stud receptacle to have at least one blocking tongue that is movable in a radially elastic manner with respect to the fastening axis, said blocking tongue being configured to engage behind a radial face of the fastening stud in a blocking position.

The radial face can in this case be a face that is oriented in an exactly radial manner, but can also be a face oriented in an inclined manner with respect to the fastening axis, for example a threaded groove or a spherical surface of a ball stud or of a double-ball stud.

When the base element is mounted axially on the fastening stud, the blocking tongue is deflected radially in an elastic manner and engages behind the radial face of the fastening stud in the pre-mounting position.

It is furthermore preferred here for the lever element to have a locking apparatus which is arranged in such a way with respect to the blocking tongue in the fastening position that the blocking tongue is locked in the blocking position.

In this embodiment, the locking apparatus of the lever element preferably prevents the blocking tongue from being deflected in the radial direction out of the blocking position in the fastening position, such that the blocking tongue is locked in this blocking position.

In this way, very high pull-off forces can be realized.

The elastic pretensioning device can be formed by a separate elastic device, such as a spring or the like, which is fixed to the lever element.

However, it is particularly preferred for the elastic pretensioning device to be formed by one or more rib(s) which is/are formed in one piece with the lever element and is/are preferably elastically deformable axially.

However, in some cases, these pretensioning ribs can also be relatively rigid such that the elastic pretensioning force arises in that the pretensioning ribs axially deform the article to be fastened in order in this way to achieve the pretensioning force, wherein the article is in this case preferably elastically deformable or elastically mounted in the axial direction.

In some cases, the pretensioning ribs can also be configured to penetrate at least partially into a surface of the article to be fastened. In this way, the clip can simultaneously be prevented from rotating with respect to the article.

The elastic pretensioning device is preferably formed by two mutually separate pretensioning portions which are arranged in the region of respective lever-element pivoting portions which are configured to establish the pivot axis.

In all of the embodiments, it is preferred for the pull-off force realized by means of the clip, that is to say the force that is necessary in order to release the clip in the axial direction from the fastening stud, to be considerably higher than that force which is required to fasten the article, that is to say that force which is required to press the base element onto the fastening stud and/or which is required to pivot the lever element into the fastening position.

It goes without saying that the abovementioned features and those yet to be explained in the following text are usable not only in the combination given in each case but also in other combinations or on their own, without departing from the scope of the present invention.

Exemplary embodiments of the invention are illustrated in the drawing and are explained in more detail in the following description. In the drawing:
- Fig. 1: shows a schematic longitudinal sectional view through a fastening arrangement with one embodiment of a clip according to the invention;
- Fig. 2: shows a plan view of the fastening arrangement in Fig. 1;
- Fig. 3: shows a plan view of a clip according to a further embodiment of the invention in a starting position;
- Fig. 4: shows the clip from Fig. 3 in a position in which the base element has been pre-mounted on a fastening stud and the lever element has been pivoted through 90°;
- Fig. 5: shows a view similar to Fig. 4, wherein the lever element has been pivoted into the fastening position;
- Fig. 6: shows a sectional view along the line VI-VI in Fig. 5;
- Fig. 7: shows a partially cut-away side view of the clip in the fastening position in order to illustrate the latching apparatus; and
- Fig. 8: shows a front view of the clip in the starting position.

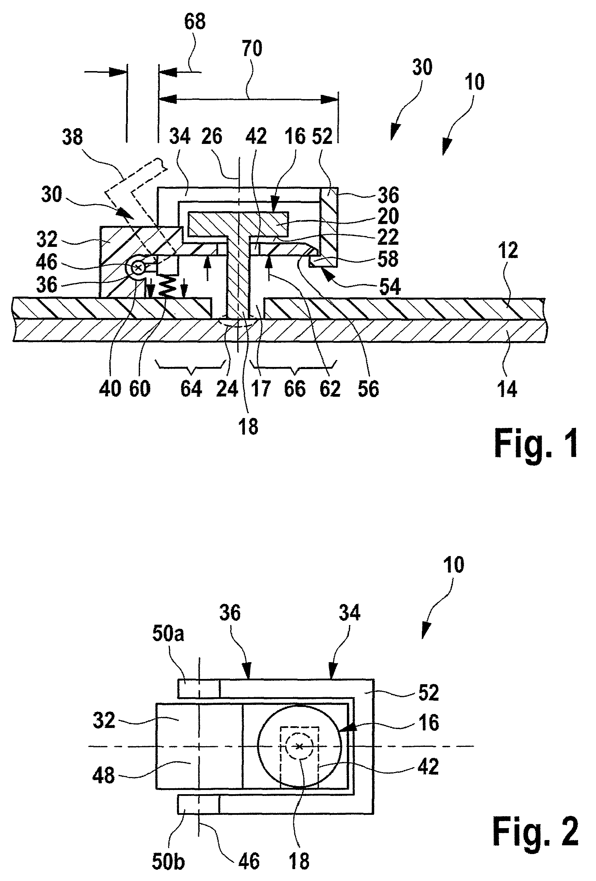

Fig. 1 shows a schematic cross-sectional view of a fastening arrangement 10. The fastening arrangement 10 serves to fasten an article 12, which can be configured in an extensive or sheet-like manner, such as an attachment part, to a workpiece 14. The workpiece 14 can be for example a body portion in the form of a sheet-metal portion. The workpiece 14 can be produced from metal, but can also be produced from plastics material or a composite material. The article 12 can likewise be produced from metal, but is preferably a plastics-material or textile article.

Joined to the workpiece 14 is a fastening stud 16 which passes through an opening 17 in the article 12. The fastening stud 16 has a shank 18 and, at its free end spaced apart from the workpiece 14, a head 20 which has a larger diameter than the shank 18. Consequently, a radial face 22, which can be used for axial support, is formed on the underside of the head 20.

The fastening stud 16 is joined to a surface of the workpiece 14, specifically by means of a joining connection 24 which is preferably formed on one side such that a through-hole, which can result in rust problems or the like in the region of the vehicle body construction, does not have to be provided in the workpiece 14.

A fastening axis of the fastening stud 16 is shown at 26 in Fig. 1.

The article 12 is fastened to the workpiece 14 by means of a clip 30. The clip 30 is preferably produced from plastics material. The clip 30 has a base element 32 and a lever element 34, wherein the lever element 34 is pivotable with respect to the base element 32 between a fastening position 36, shown by way of solid lines in Fig. 1, and a starting position 38 indicated by way of dashed lines.

The base element 32 has a bearing portion 40 by means of which the base element 32 can be placed on a face of the article 12. In Fig. 1, the article 12 is illustrated in a manner immediately adjoining the workpiece 14, but it can also be arranged in a manner spaced apart from the workpiece 14.

Furthermore, the base element 32 has a fastening stud receptacle in the form of a shank receiving opening 42. The shank receiving opening 42 is formed in the present case as a laterally open opening, as is shown in the schematic plan view of the clip 30 in Fig. 2. Accordingly, the base element 32 can be mounted on the fastening stud 16 by way of a movement in a transverse direction with respect to the fastening axis 26, during which movement the shank 18 is introduced into the shank receiving opening 42.

The lever element 34 is mounted on the base element 32 in a pivotable manner via a pivot axis 46. The pivot axis 46 extends in a skewed manner with respect to the fastening axis 26. The pivot axis 46 is preferably oriented such that it extends approximately parallel to the extent of the article 12 in the fastening position 36.

As is shown in Fig. 2, the base element 32 has a base-element pivoting portion 48. The lever element 34 has two lever-element pivoting portions 50a, 50b, which are arranged on opposite sides of the base-element pivoting portion 48 with respect to the pivot axis 46.

The base-element pivoting portion 48 and the lever-element pivoting portions 50a, 50b are preferably configured as robust, loosely moulded-on hinges.

In other words, protrusions, which engage in eyes of the lever-element pivoting portions 50a, 50b, or vice versa, can be moulded for example on the base element.

As can be seen in particular in Fig. 2, the lever-element pivoting portions 50a, 50b are connected together via a hoop portion 52 which extends from the pivot axis 46 to that radial side of the fastening stud receptacle 42 that is located opposite the pivot axis 46.

In this region 66 located opposite the pivot axis 46, the base element 32 and the lever element 34 are preferably connected together via a latching apparatus 54, which is indicated schematically in Fig. 1. The latching apparatus 54 contains a base-element latching device 56 and a lever-element latching device 58, wherein at least one of these latching devices is elastically deformable in order to be able to engage for example behind a latching protrusion of the other device in order to establish a latching connection, as is indicated schematically in Fig. 1.

The clip 30 furthermore contains an elastic pretensioning device 60. The pretensioning device 60 serves to elastically clamp the clip 30 in the fastening position 36 with respect to the fastening stud 16 and with respect to the article 12 or the workpiece 14. As a result, it is possible to pre-mount the clip 30 with relatively low mounting forces. By contrast, on account of the pretensioning force of the pretensioning device 60, the clip can be clamped on the fastening stud 16 such that very high pull-off forces are required in order to release the clip 30 from the stud again. In particular, a clip 30 clamped in this way is comparatively insensitive to vibrations, as occur for example regularly in the field of vehicles.

The elastic pretensioning device 60 is configured in the present case to establish an elastic pretension parallel to the fastening axis 46 or substantially parallel thereto, specifically between the lever element 34 and a top side of the article 12. The forces established thereby, which push the lever element 34 away from the article 12, are transmitted via the pivot axis 46 to the base element 32, which exerts these pretensioning forces on the radial face 22 of the fastening stud 16, as is indicated by arrows 62 indicating this pretensioning force in Fig. 1.

The pretensioning device is in this case arranged in a radial region 64 between the fastening stud 16 or the fastening stud receptacle 42 and the pivot axis 46, whereas the latching apparatus 54 is arranged in a region 66 which is arranged on that side of the fastening stud receptacle 42 that is located radially opposite the pivot axis 46.

A first lever length 68 is in this case established between the pretensioning device 60 and the pivot axis 46 in a transverse direction with respect to the fastening axis 26. A second lever length 70 is established between the pretensioning device 60 and the latching device 54, which is arranged in the second region 66. The ratio of the lever lengths 68 to 70 is preferably in a range between 1:2 and 1:10, in particular 1:2 and 1:5, and is preferably greater than 1:1.5 and preferably less than 1:20.

Since the lever element 34 is actuated on the side located opposite the pivot axis 46 in order to push the lever element 34 from the starting position 38 into the fastening position 36 and in this way to be able to latch the latching apparatus 54 in place, it is possible by way of these ratios of the lever lengths 68, 70 for this operation to take place with relatively low forces, even though relatively high pretensioning forces 62 are achievable.

The hoop portion 52 can also be configured for example such that it connects the lever-element pivoting portions 50a, 50b by means of a cover plate extending transversely to the fastening axis 26, said cover plate covering at least the fastening stud receptacle 42 in order in this way to be able to avoid external influences.

The shape of the stud 16 can be configured in various ways. The head 20 can be configured in a substantially spherical manner, for example. The shank 18 can also be configured in a considerably shorter manner, such that a spherical head 20 is almost directly adjacent to the workpiece 14, for example. However, the stud 16 can also be configured as a head-free shank, for example with a rough external thread on which a fastening stud receptacle 42 acts such that thread flanks form the radial face 22.

In the present case, the base element is mounted in a transverse direction with respect to the fastening axis 26. However, in alternative configurations, the base element 32 can also be mounted on the fastening stud 16 in a direction parallel to the fastening axis 26.

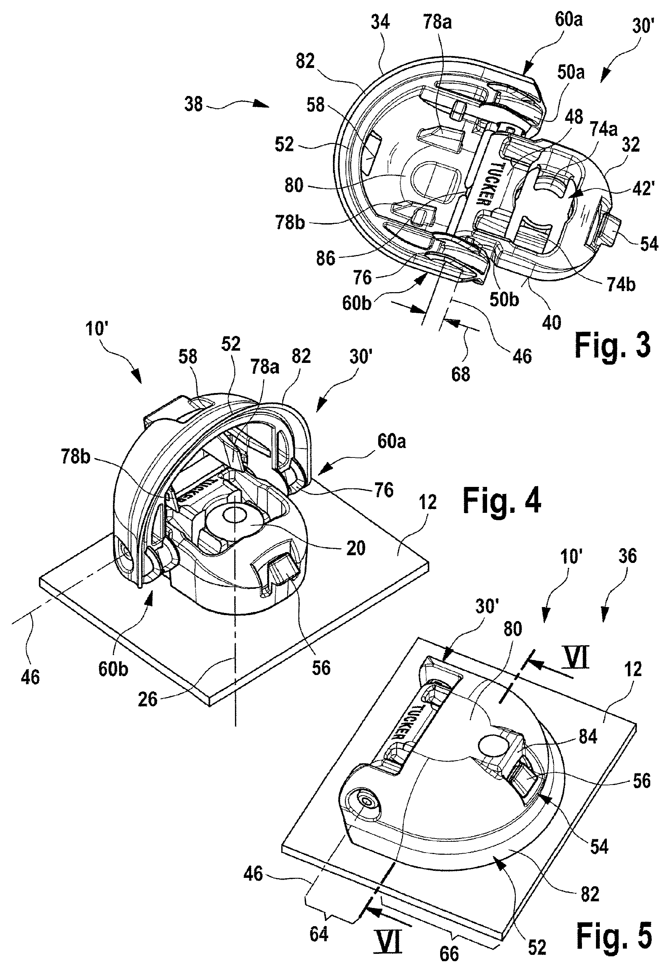

Figs. 3 to 8 show a further embodiment of a clip 30', which generally corresponds in terms of structure and functioning to the clip 30 in Figs. 1 and 2. Identical elements are therefore identified by identical reference signs. It is essentially the differences that are explained in the following text.

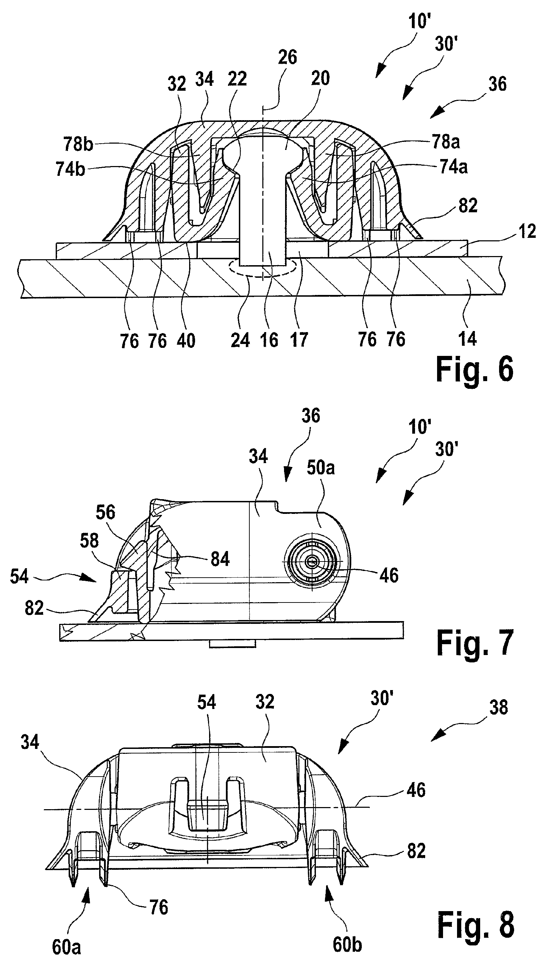

In the clip 30', the fastening stud receptacle 42 is configured such that a through-opening in the base element 32 is formed laterally with radially deflectable blocking tongues 74a, 74b, such that the base element 32 can be pushed on axially via a fastening stud 16 for pre-mounting. As shown in Fig. 6, the fastening stud 16 has a head 20 which has an approximately spherical shape or can be formed in a conical manner on the top side and/or the underside.

In other words, in the fastening position 36 (see Figs. 5, 6 and 7), the blocking tongues 74a, 74b engage behind a preferably annular radial face 22 of the head 20 of the fastening stud 16.

The elastic pretensioning device 60 is formed by a plurality of pretensioning ribs 76, which will be discussed further in the following text.

Also formed on the lever element 34 are locking ribs 78a, 78b, which are assigned to the blocking tongues 74a, 74b. The locking ribs 78a, 78b engage between a peripheral portion of the base element 32 and the respective blocking tongues 74a, 74b in the fastening position 36, such that the locking ribs 78 prevent radial deflection of the blocking tongues 74 in the fastening position, as is shown in Fig. 6.

It can also be seen that the lever-element pivoting portions 50a, 50b are connected together via a cover portion 80 which covers the hoop portion 52 and covers the fastening stud receptacle 42 in the fastening position 36 and consequently protects said fastening stud receptacle 42 from interference or external influences.

Also formed on the hoop portion 52 is a protective ring 82, which is at a short distance from the article 12 in the fastening position 36, in order to prevent foreign bodies from passing into the region of the fastening stud receptacle 42.

Shown at 84 is a latching stud which is arranged behind the base-element latching device 56, formed by a latching tongue, in the fastening position 36, such that the latching apparatus 54 is releasable only with difficulty.

Finally, Fig. 3 shows a severable connecting element 86 via which the base element and the lever element are connected together in the starting position 38 and in the process keep the base element 32 and the lever element 34 in this starting position, for example for the purpose of transporting to a mounting location.

In order to pivot the lever element 34 from the starting position 38 in the direction of the fastening position 36, this connecting element 86 should be severed, although, on account of the fact that this is preferably configured as a small, pointed web, this is generally possible without great application of force.

In some variants, the connecting element 86 can also be used to produce the base element 32 and the lever element 34 together from the same plastics material in an injection-moulding operation.

The pretensioning ribs 76 are configured such that, as seen in the axial direction of the pivot axis 46, they are configured in an approximately arcuate or semicircular manner, such that a portion of these pretensioning ribs 76 in the form of a segment of a circle protrudes with respect to a base face of the clip 30', which can be formed in particular by the protective ring 82, as is illustrated in particular in Fig. 8.

The pretensioning ribs 76 can be elastically deformed in a direction parallel to the fastening axis 26 during adoption of the fastening position 36 and/or can act on the article 12 such that the latter generates an axial pretensioning force.

In the present case, the lever-element pivoting portions 50a, 50b are each assigned two such pretensioning ribs 76, which each form a pretensioning device 60a, 60b (Fig. 8).

## Claims

1. Clip (30) for fastening an article (12) to a workpiece (14) with respect to which a fastening stud (16) protrudes, having
- a base element (32) which has a fastening stud receptacle (42) via which the base element (32) is mountable on the fastening stud (16),
- a lever element (34) which is coupled to the base element (32) so as to be pivotable about a pivot axis (46) between a starting position (38) and a fastening position (36),
**characterized in that** the clip (30) has an elastic pretensioning device (60) which is arranged at the lever element (34) in a region (64) between the fastening stud receptacle (42) and the pivot axis (46).

2. Clip according to Claim 1 or according to the preamble of Claim 1, **characterized in that** the lever element (34) is latchable to the base element (32) in the fastening position (36) by means of a latching apparatus (54), wherein a lever-element latching device (58) of the latching apparatus (54) is arranged on the lever element (34) in a region (66) on that side of the fastening stud receptacle that is located opposite the pivot axis (46), and/or wherein a base-element latching device (56) is arranged on that side of the fastening stud receptacle (42) that is located opposite the pivot axis (46).

3. Clip according to Claim 1 or 2, **characterized in that** the base element has a base-element pivoting portion (48) aligned with the pivot axis (46), wherein the lever element (34) has two lever-element pivoting portions (50) which are arranged on opposite sides of the base-element pivoting portion (48).

4. Clip according to Claim 3, **characterized in that** the lever-element pivoting portions (50) are connected together by means of a cover portion (80) which covers at least the fastening stud receptacle (42) of the base element (32) in the fastening position (36).

5. Clip according to one of Claims 1-4 or according to the preamble of Claim 1, **characterized in that** the base element (32) and the lever element (34) are connected together in the starting position (38) via a severable connecting element (86) which is intended to be severed in order to establish the fastening position.

6. Clip according to one of Claims 1-5, **characterized in that** the base element (32) and the lever element (34) are formed in one piece.

7. Clip according to one of Claims 1-6, **characterized in that** the fastening stud receptacle (42) of the base element (32) is configured such that the base element (32) is mountable in a transverse direction with respect to a fastening axis (26).

8. Clip according to one of Claims 1-7, **characterized in that** the fastening stud receptacle (42') of the base element (32) is configured such that the base element (32) is mountable in a direction parallel to a fastening axis (26).

9. Clip according to Claim 8, **characterized in that** the fastening stud receptacle (42') has at least one blocking tongue (74) that is movable in a radially elastic manner with respect to the fastening axis (26), said blocking tongue (74) being configured to engage behind a radial face (22) of the fastening stud (16) in a blocking position.

10. Clip according to Claim 9, **characterized in that** the lever element has a locking apparatus (78) which is arranged in such a way with respect to the blocking tongue (74) in the fastening position (36) that the blocking tongue (74) is locked in the blocking position.

11. Method for fastening an article (12) to a workpiece (14) with respect to which a fastening stud (16) protrudes, having the steps of:
- providing a clip (30) according to one of Claims 1-10 in the starting position (38);
- arranging the article (12) on the workpiece (14) such that the fastening stud (16) protrudes with respect to the article (12);
- mounting the base element (32) on the fastening stud (16) such that the fastening stud (16) engages with the fastening stud receptacle (42); and
- pivoting the lever element (34) with respect to the base element (32) in order to establish the fastening position (36).
